# EUROPÄISCHE PATENTSCHRIFT

(11) **EP 4 053 436 B1**
(45) Veröffentlichungstag und Bekanntmachung des Hinweises auf die Patenterteilung: **11.09.2024**
(21) Anmeldenummer: 22160054.7
(22) Anmeldetag: 03.03.2022
(51) Int. Cl.: F16J 15/34, F16J 15/447, F16J 15/16

(54) **AXIALDICHTRING IN EINEM ANGETRIEBENEN WERKZEUG**
AXIAL SEALING RING IN A DRIVEN TOOL
BAGUE D'ÉTANCHÉITÉ AXIALE DANS UN OUTIL ENTRAÎNÉ

(30) Priorität: 04.03.2021 DE 202021101111 U
(43) Veröffentlichungstag der Anmeldung: 07.09.2022
(73) Patentinhaber: EWS Weigele GmbH & Co. KG, 73066 Uhingen (DE)
(72) Erfinder: WEIGELE, Matthias, 73257 Köngen (DE); WIESENBERG, Michael, 73333 Gingen (DE)
(74) Vertreter: Baur & Weber Patentanwälte PartG mbB

(56) Entgegenhaltungen:
- JP-A- 2005 257 051
- US-A- 2 352 336
- US-A- 2 637 574
- US-A- 3 016 251
- US-A1- 2020 080 643

## Beschreibung

Die Erfindung betrifft einen Axialdichtring abgestützt auf einer rotierbaren Welle in einem angetriebenen Werkzeug.

Ein angetriebenes Werkzeug wird in einer Werkzeugmaschine zur Fertigung von Werkstücken eingesetzt. Es kann beispielsweise in einem Revolver oder einer Werkzeugscheibe eingesetzt werden. In angetriebenen Werkzeugen können Bearbeitungswerkzeuge, wie z. B. Bohrer oder dergleichen, über verschiedene Spannmittel gespannt werden.

Generell werden angetriebene Werkzeuge insbesondere zur spanenden Bearbeitung eingesetzt. Dabei hat es sich bewährt, angetriebene Werkzeuge in verschiedensten Variationen, das heißt gerade, abgewinkelt oder achsversetzt sowie in unterschiedlichen Bauformen, beispielsweise bezüglich Schaftdimensionen oder der Befestigungsart, auszuführen.

In angetriebenen Werkzeugen sind Axialdichtringe abgestützt auf rotierbaren Wellen vorgesehen. Der Axialdichtring, auch als Axialwellendichtring bezeichnet, schützt die Welle vor Schmiermittelverlust und verhindert, dass Fremdstoffe wie Wasser oder Staub von außen eindringen können.

Ein konventioneller Axialdichtring für ein angetriebenes Werkzeug ist aus elastischem Material mit V-förmigem Profil. Ein Schenkel des V-förmigen Querschnitts formt eine in axialer Richtung geneigte Dichtlippe und die Basis des V-förmigen Querschnitts ist der Welle zugewandt. Das V-förmige Profil ist ein gängiges Profil für Axialdichtringe und wird für einen breiten Bereich von Wellendurchmessern, insbesondere zwischen 3 mm und 1000 mm Wellendurchmesser, verwendet. Der vollgummierte Axialdichtring wird direkt auf der Welle montiert und dichtet axial an der Gegenlauffläche. Die geringe Anpresskraft der Dichtlippe reduziert die Reibung. Der Axialdichtring mit V-förmigem Profil kann auch als sekundäres Dichtelement zum Schutz von Primärdichtungen eingesetzt werden, deren Funktionsfähigkeit durch aggressive Primärmedien beeinträchtigt werden. Solch ein Dichtring mit V-förmigem Profil kann üblicherweise im Bereich bis zu 12 m/s betrieben werden.

Ein Gammadichtring weist einen Dichtkörper mit einer schräg nach außen verlaufenden, axial wirkenden Dichtlippe und einen Metallaußenring als mechanischer Verstärkung auf. Der Metallaußenring kann aus Stahl und die biegeweiche Dichtlippe aus NBR (Acrylnitril-Butadien-Kautschuk, kurz auch Nitrilkautschuk) oder FKM (Fluorkarbon-Kautschuk) gefertigt sein. Der Gammaring ist ein axial dichtender, einfach wirkender Axialdichtring für die drucklose Wellen- und Lagerabdichtung gegen Schmutz und Spritzwasser von außen. Der Gammaring dichtet gegen eine senkrecht angeordnete Gegenlauffläche. Der metallische Festsitz am Innendurchmesser bietet einen sicheren Halt auf der Welle und der verlängerte Metallring bietet darüber hinaus einen guten Schutz gegen grobe Verunreinigungen. Solch ein Dichtring kann üblicherweise im Bereich bis zu 8 m/s betrieben werden.

US 3 016 251 A, US 2 637 574 A, US 2 352 336 A, JP 2005 257051 A (gemäß der Präambel von Anspruch 1) und US 2020/080643 A1 zeigen Dichtringe aus verschiedenen Einsatzgebieten, deren Dichtwirkungen drehgeschwindigkeitsabhängig sind.

Es stellt sich die Aufgabe einen Axialdichtring in einem angetriebenen Werkzeug bereit zu stellen, der mit größerer Geschwindigkeit betrieben werden kann, um in mit hoher Drehzahl angetriebenen Werkzeugen eingesetzt zu werden.

Die Aufgabe wird durch einen Axialdichtring mit den Merkmalen des Anspruchs 1 gelöst.

Der Axialdichtring abgestützt auf einer rotierbaren Welle in einem angetriebenen Werkzeug umfasst einen Dichtkörper mit einer dichtenden Stirnseite und einer Außenseite. Der Dichtkörper umfasst eine umlaufende Nut, die sich von der Außenseite ins Dichtkörperinnere erstreckt und eine Dichtlippe, die zwischen der dichtenden Stirnseite und der Nut verläuft. Der Axialdichtring umfasst ferner ein Gehäuse, das auf der Außenseite des Dichtkörpers angeordnet ist und die Nut überdeckt, wobei der Dichtkörper und das Gehäuse formschlüssig und kraftschlüssig verbunden sind. Der Axialdichtring umfasst ferner einen elastischen Vorspannring, der in der Nut angeordnet ist, sodass die Dichtlippe in axialer Richtung geneigt ist. Die Dichtlippe ist elastisch verformbar, sodass bei auf den Axialdichtring einwirkender Zentrifugalkraft die Neigung der Dichtlippe in axialer Richtung verringert ist. Der Vorspannring ist bei auf den Axialdichtring einwirkender Zentrifugalkraft elastisch verformbar, sodass er sich aufweitet. Die Nut hat einen abgerundeten Nutboden und zwei voneinander beabstandete Nutflanken, von denen eine der dichtenden Stirnseite des Dichtkörpers zugewandt ist, wobei der Bereich des Dichtkörpers zwischen der dichtenden Stirnseite und der gegenüberliegenden, ihr zugewandten Nutflanke die Dichtlippe bildet.

Der Axialdichtring ist so ausgebildet, dass er auf der Welle abgestützt ist. Das angetriebene Werkzeug mit dem Axialdichtring erlaubt den Betrieb mit hohen Drehzahlen. Der Axialdichtring ist bei Geschwindigkeiten bis ungefähr 40 m/s im angetriebenem Werkzeug einsetzbar. Der Axialdichtring ist eine in axialer Richtung wirkende, im Wesentlichen ohne Ecken und Kanten in sich geschlossene, insbesondere runde Dichtvorrichtung. Die Welle ist ein rotierbares Maschinenteil. Der Axialdichtring dreht sich mit der Welle und dichtet an der stehenden Gegenlauffläche ab. Im statischen Zustand liegt die geneigte Dichtlippe an der Gegenlauffläche an. Der Vorspannring verstärkt die Dichtwirkung der Dichtlippe.

Je schneller die Welle rotiert, desto geringer wird die Neigung der Dichtlippe wegen der Zentrifugalkraft, auch als Fliehkraft bezeichnet. Bei niedrigen Drehzahlen liegt die Dichtlippe leicht an. Bei sehr hoher Drehzahl berührt die Dichtlippe die Gegenlauffläche nicht mehr. Wasser und Schmutz werden durch die Fliehkraft von dem Axialdichtring weggeschleudert und können deshalb nicht am Axialdichtring vorbeigelangen.

Der Vorspannring wird bei auf den Axialdichtring einwirkender Zentrifugalkraft elastisch verformt. Er wird aufgeweitet, sodass sich er aus seiner Ruheposition nach außen bewegt und dadurch weniger auf die Dichtlippe wirken kann. Dies unterstützt die Verringerung der Neigung bei der Dichtlippe. Vorteilhafterweise ist der Vorspannring elastischer als der Dichtkörper, sodass er eine stärkere Verformung durch die Zentrifugalkraft erfährt als der Dichtkörper, insbesondere die Dichtlippe.

In einer Ausführung sind die Nut und das sie überdeckende Gehäuse derart geformt, dass ein Hohlraum sich vom Vorspannring radial nach außen erstreckt, sodass bei auf den Axialdichtring einwirkender Zentrifugalkraft Platz für den sich nach außen verformenden Vorspannring ist. In einer Ausführung weist die Nut eine schrägt verlaufende Flanke auf, sodass der Hohlraum entgegen der axialen Richtung aufgeweitet ist. Die schräg verlaufende Flanke wirkt wie eine Rutschbahn für den sich nach außen verformenden Vorspannring, entlang der der Vorspannring von der Dichtlippe weggeführt wird.

In einer Ausführung erstreckt sich das Gehäuse entlang einer weiteren Stirnseite, die von der dichtenden Stirnseite abgewandt ist, und über die Außenseite bis zur Dichtlippe. Auf diese Weise hat das Gehäuse ausreichend Halt und schützt auch die Seite des Axialdichtrings, die weder dichtet noch auf der Welle aufliegt.

In einer Ausführung greift die Außenseite des Dichtkörpers in die Innenseite des Gehäuses ein, sodass ein Formschluss gebildet wird, um eine sichere Verbindung der Komponenten des Axialdichtrings zu erzielen. Wegen der Ringform der Komponenten ist hierfür ausreichend, dass die Profile so geformt sind und ineinandergreifen, dass keine axiale Bewegung möglich ist. Nichtsdestotrotz kann zwischen den Komponenten Spiel sein. Vorteilhafterweise bilden der elastische Dichtkörper und das Gehäuse beim Ineinandergreifen auf Grund der elastischen Verformung des Dichtkörpers auch einen Kraftschluss.

In einer Ausführung ist die Oberkante der Dichtlippe abgeschrägt und berührt das Gehäuse nicht. Zwischen der Dichtlippe und dem Gehäuse ist an der dichtenden Stirnseite ein geringer Abstand, sodass die Beweglichkeit der Dichtlippe, wenn sie ihre Neigung bei der Rotation der Welle verringert oder im Ruhezustand wieder die geneigte Position einnimmt, nicht durch das Gehäuse eingeschränkt wird. Der Abstand zwischen der Dichtlippe und dem Gehäuse ist deutlich geringer als der Durchmesser des Vorspannrings, sodass dieser zwischen dem Dichtkörper und dem Gehäuse verbleibt.

In einer Ausführung ist das Gehäuse metallisch, insbesondere aus Stahl ausgebildet, sodass es eine gute mechanische Unterstützung des Axialdichtrings bietet und zuverlässig verhindert, dass der Vorspannring bei auf den Axialdichtring einwirkender Zentrifugalkraft weggeschleudert wird. Der Vorspannring kann aus Acrylnitril-Butadien-Kautschuk (NBR) gefertigt sein. Dieser Synthesekautschuk hat gute technologische Eigenschaften. Der Dichtkörper ist in einer Ausführung aus einem Materialverbund gefertigt, was eine Optimierung hinsichtlich seiner technologischen Eigenschaften erlaubt.

Nachfolgend werden Ausführungsbeispiele anhand der Zeichnung näher erläutert. Es zeigen:
Figur 1 eine Schnittdarstellung durch einen Bereich eines Ausführungsbeispiels eines angetriebenen Werkzeugs, und
Figur 2 eine Schnittdarstellung eines Ausführungsbeispiels eines Axialdichtrings.

In den Figuren sind gleiche oder funktional gleichwirkende Komponenten mit den gleichen Bezugszeichen versehen.

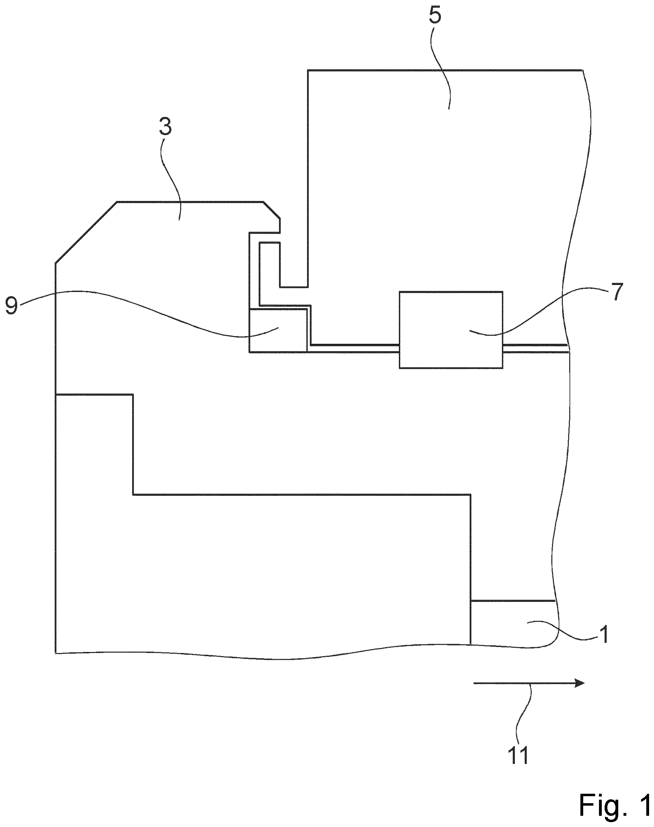

Figur 1 zeigt schematisch eine Schnittdarstellung durch einen Bereich eines Ausführungsbeispiels eines angetriebenen Werkzeugs. Das angetriebene Werkzeug weist eine rotierbare Spindel 1 auf, die eine Aufnahme 3 für ein Bearbeitungswerkzeug (in Figur 1 nicht dargestellt) antreibt. Die Aufnahme 3 ist eine Welle, mit der eine Drehbewegung auf das Bearbeitungswerkzeug übertragbar ist. In die Aufnahme 3 kann das Bearbeitungswerkzeug in fachüblicher Weise im angetriebenen Werkzeug befestigt werden. Bei dem Bearbeitungswerkzeug kann es sich typischerweise um einen Bohrer, Fräser oder dergleichen handeln. Die Spindel 1 und die Aufnahme 3 sind rotierbar in einem Werkzeuggehäuse 5 gelagert. Die Aufnahme 3 wird durch ein Lager 7 geführt, das zwischen dem Werkzeuggehäuse 5 und der Aufnahme 3 angeordnet ist.

Zwischen dem Werkzeuggehäuse 5 und der Aufnahme 3 ist ein auf der rotierbaren Aufnahme 3 abgestützter Axialdichtring 9 angeordnet, der in axialer Richtung 11 dichtet und gegen das Eindringen von Wasser und Schmutz dichtet. Der Axialdichtring 9 wird mit einer dafür vorgesehenen Vorrichtung auf die als Aufnahme 3 ausgebildete Welle gepresst, sodass er mit der Welle rotiert.

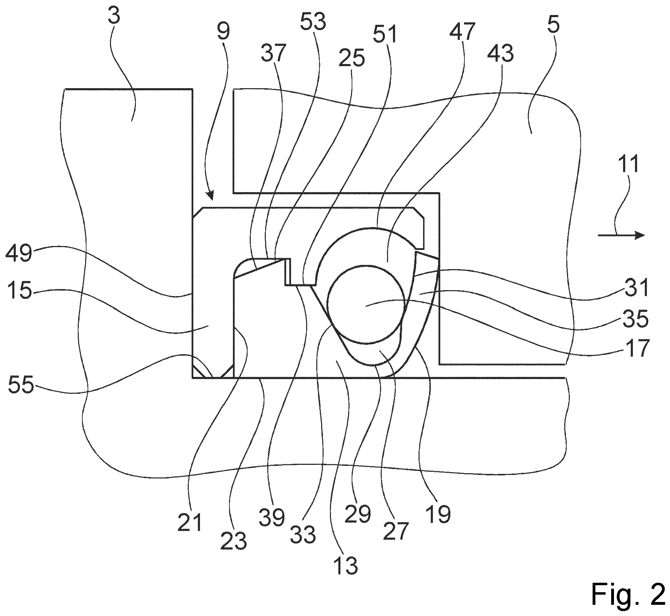

Figur 2 zeigt schematisch eine Schnittdarstellung eines Ausführungsbeispiels eines Axialdichtrings 9. Der Axialdichtring 9 ist auf der als Aufnahme 3 ausgebildeten Welle angeordnet und dichtet in axialer Richtung 11 gegen das Werkzeuggehäuse 5.

Der Axialdichtring 9 weist einen Dichtkörper 13, ein Gehäuse 15 und einen Vorspannring 17 auf. Die Komponenten des Axialdichtrings 9 haben eine ringförmige Form mit unterschiedlichen Profilen, die in Figur 2 dargestellt sind.

Der Dichtkörper 13 hat eine dichtende Stirnseite 19, eine gegenüberliegende weitere Stirnseite 21 sowie eine radial zum Ringinneren gewandte Innenseite 23 und eine zum Ringäußeren gewandte Außenseite 25. Der Dichtkörper 13 ist einstückig aus einem elastischen Materialverbund, auch als Material-Compound bezeichnet, ausgebildet.

Die Innenseite 23 des Dichtkörpers 13 ist zylinderförmig. Auf der Außenseite 25 erstreckt sich eine umlaufende Nut 27 von der Außenseite 25 ins Dichtkörperinnere. Die Nut 27 hat einen abgerundeten Nutboden 29 und zwei voneinander beabstandete Nutflanken 31, 33. Die Nut 27 ist näher an der dichtenden Stirnseite 19 als an der weiteren Stirnseite 21 positioniert. Die der weiteren Stirnseite 21 zugewandte Flanke 33 der Nut 27 verläuft leicht schräg, sodass sich die Nut 27 nach außen aufweitet. Der Bereich des Dichtkörpers 13 zwischen der dichtenden Stirnseite 19 und der ihr zugewandten Flanke 31 der Nut 27 bildet eine Dichtlippe 35. Sie ist in axialer Richtung 11 neigbar. Um diese Verformung zu unterstützen, ist die Kante zwischen der dichtenden Stirnseite 19 und der Innenseite 23 abgerundet und die Dichtlippe 35 im zur Innenseite 23 und dem Nutboden 29 benachbarten Bereich dünner ausgebildet, was mit einer leichteren Verformbarkeit einhergeht, die das Neigen der Dichtlippe 35 erleichtert.

Zwischen der Nut 27 und der weiteren Stirnseite 21 hat die Außenseite 25 einen kegelstumpfförmigen Bereich 37 und einen zylinderförmigen Bereich 39, zwischen denen ein stufenförmiger Absatzring ist. Die Deckfläche des kegelstumpfförmigen Bereichs 37 bildet die weitere Stirnseite 21. Der Durchmesser des zylinderförmigen Bereichs 39 ist geringer als der Durchmesser der Grundfläche des kegelstumpfförmigen Bereichs 37.

Der Vorspannring 17 ist als O-Ring mit rundem oder ovalem Profil ausgebildet. Der Vorspannring 17 ist in der Nut 27 angeordnet, sodass die Dichtlippe 35 des Dichtkörpers 13 wegen des gegen die Dichtlippe 35 drückenden Vorspannrings 17 in axialer Richtung 11 geneigt ist. Der Vorspannring 17 ist aus einem elastischen Material ausgebildet, beispielsweise NBR (Acrylnitril-Butadien-Kautschuk). Der Vorspannring 17 ist elastischer als der Dichtkörper 13.

Das ringförmige Gehäuse 15 dient zur mechanischen Unterstützung des Dichtkörpers 13 und ist aus einem starren Material, insbesondere Metall, bevorzugt Stahl, ausgebildet. Das Gehäuse 15 erstreckt sich über die weitere Stirnseite 21 und die Außenseite 25 des Dichtkörpers 13 bis zur Dichtlippe 35 und überdeckt die offene Nut 27. Die Außenseite des Gehäuses 15 ist zylinderförmig. Die der Außenseite 25 des Dichtkörpers 13 zugewandte Gehäuseinnenseite hat über der Nut 27 eine gerundete, kreisbogenähnliche Kontourlinie 47, und formt aus Gehäuse 15 und Nut 27 einen Hohlraum 43. Er erstreckt sich vom Nutboden 29, nahe dem der Vorspannring 17 verläuft ist, über den Vorspannring 17 hinaus radial nach außen. Durch die schräg verlaufende Flanke 33 der Nut 27 ist er außerdem nach außen hin entgegen der axialen Richtung 11 aufgeweitet.

Die Oberkante der Dichtlippe 35 ist leicht angeschrägt. Die Dichtlippe 35 berührt das Gehäuse 15 nicht, sodass ihre Beweglichkeit nicht durch Reibung am Gehäuse 35 eingeschränkt wird. Vielmehr ist zwischen dem Gehäuse 15 und der Dichtlippe 35 ein kleiner Spalt, sodass die Neigungsbewegung der Dichtlippe 35 nicht behindert wird, wenn sie ihre Neigung bei der Rotation der Welle verringert oder im Ruhezustand wieder die geneigte Position einnimmt. Der Abstand zwischen dem Gehäuse 15 und der Dichtlippe 35 ist deutlich geringer als der Durchmesser des Vorspannrings 17, sodass dieser trotz des Spalts nicht unbeabsichtigt aus dem Hohlraum 43 zwischen dem Dichtkörper 13 und dem Gehäuse 15 rutschen kann.

Zwischen der gerundeten Konturlinie 47 und einer Gehäusestirnseite 49 weist die Gehäuseinnenseite drei zylinderförmige Bereiche auf. Zwischen einem zylinderförmigen Bereich 51 benachbart zur gerundeten Konturlinie 47 und einem mittleren zylinderförmigen Bereich 53 mit größerem Durchmesser ist ein stufenförmiger Absatzring. Ein zylinderförmiger Bereich 55 bildet die Gehäusestirnseite 49 und erstreckt sich über die weitere Stirnseite 21 des Dichtkörpers 13.

Sein Übergang zum mittleren zylinderförmigen Bereich 53 ist abgerundet ausgebildet.

Der Dichtkörper 13 und das Gehäuse 15 sind formschlüssig und kraftschlüssig verbunden. Die Profile des Dichtkörpers 13 und des Gehäuses 15 greifen derart ineinander, dass sie in axialer Richtung 11 bis auf Spiel nicht zueinander verschiebbar sind. Die Außenseite 25 des Dichtkörpers 13 und die Gehäuseinnenseite sind im Bereich zwischen dem Hohlraum 43 und der Gehäusestirnseite 49 derart geformt, dass die Außenseite 25 des Dichtkörpers 13 in die Gehäuseinnenseite eingreift, sodass keine Bewegung in axialer Richtung 11 möglich ist.

In diesem Ausführungsbeispiel greift der radial aufragende kegelstumpfförmige Bereich 37 des Dichtkörpers 13 in den mittleren zylindrischen Bereich 53 der Gehäuseinnenseite. Die schräge Kante des Dichtkörpers 13 erleichtert das Zusammenfügen von Dichtkörper 13 und Gehäuse 15 durch elastische Verformung, nachdem der Vorspannring 17 in der Nut 27 platziert worden ist. Wegen der Elastizität des Dichtkörpers 13 wird die formschlüssige Verbindung durch einen Kraftschluss unterstützt.

Die zusammengefügten Komponenten bilden den Axialdichtring 9 mit im wesentlichen rechteckiger Außenkontour, abgesehen von der in axialer Richtung 11 geneigten Dichtlippe 35.

Der beschriebene Axialdichtring 9 dreht sich mit der als Aufnahme 3 ausgebildeten Welle und dichtet am stehenden Werkzeuggehäuse 5 ab. Im statischen Ruhezustand liegt die in axialer Richtung geneigte Dichtlippe 35 am Werkzeuggehäuse 5 an. Der Vorspannring 17 verstärkt die axiale Dichtwirkung der Dichtlippe 35.

Je schneller die Welle rotiert, desto stärker wirkt eine Zentrifugalkraft auf die Dichtlippe 35, die zu einer Bewegung der Dichtlippe 35 entgegen der axialen Richtung 11 führt. Die Zentrifugalkraft wirkt radial von der Rotationsachse nach außen, sodass die geneigte und auf dem Werkzeuggehäuse 5 anliegende Dichtlippe 35 auf Grund elastischen Verformung ihre Neigung zunehmend verringert und abhebt. Da der Vorspannring 17 elastischer ist als der Dichtkörper 13 bewirkt seine elastische Verformung auf Grund der Zentrifugalkraft, dass er schneller aus seiner Ruheposition abhebt. Die Zentrifugalkraft bewirkt eine zunehmende Aufweitung des Ringdurchmessers, sodass der Vorspannring 17 sich nach außen bewegt und dadurch die Vorspannung auf die Dichtlippe 15 und deren Neigung reduziert. Durch die schräge Flanke 33 der Nut 27, die als Rutschbahn wirkt, wird die Bewegung des Vorspannrings 17 nach außen und von der Dichtlippe 35 weg unterstützt. Das Gehäuse 15 verhindert, dass der Vorspannring 17 aus der Nut 27 geschleudert wird.

Ab einer gewissen Drehzahl ist der Axialdichtring 9 berührungslos zum Werkzeuggehäuse 5. Wasser und Schmutz wird bei hoher Drehzahl durch die Zentrifugalkraft von der Dichtlippe 15 weggeschleudert und kann nicht in das Werkzeuggehäuse 5 eindringen. Bei niedrigen Drehzahlen liegt die Dichtlippe 35 leicht an, bei Stillstand liegt sie stark an, wodurch ein sicheres Abdichten zum Werkzeuggehäuse 5 erreicht wird.

Wenn der Axialdichtring 9 in seinen Ruhezustand zurückkehrt, nehmen der Dichtkörper 13 und der Vorspannring 17 auf Grund ihrer Materialelastizität und der nicht mehr wirkenden Zentrifugalkraft ihre Ruhepositionen wieder ein und die geneigte Dichtlippe 35 liegt wieder am Werkzeuggehäuse 5 an. Wegen der freien Beweglichkeit der Dichtlippe 35 und des Drucks des Vorspannrings 17 liegt die Dichtlippe 35 auch bei geringem Verschleiß in der Ruheposition noch sicher am Werkzeuggehäuse 5 an.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Bezugszeichen

- 1: Spindel
- 3: Aufnahme
- 5: Werkzeuggehäuse
- 7: Lager
- 9: Axialdichtring
- 11: axiale Richtung
- 13: Dichtkörper
- 15: Gehäuse
- 17: Vorspannring
- 19: dichtende Stirnseite
- 21: weitere Stirnseite
- 23: Innenseite
- 25: Außenseite
- 27: Nut
- 29: Nutboden
- 31, 33: Nutflanke
- 35: Dichtlippe
- 37: kegelstumpfförmiger Bereich
- 39, 51, 53, 55: zylindrischer Bereich
- 43: Hohlraum
- 47: Kontourlinie
- 49: Gehäusestirnseite

## Patentansprüche

1. Axialdichtring (9) abgestützt auf einer rotierbaren Welle in einem angetriebenen Werkzeug umfassend
- einen Dichtkörper (13) mit einer dichtenden Stirnseite (19) und einer Außenseite (25) sowie einer umlaufenden Nut (27), die sich von der Außenseite (25) ins Dichtkörperinnere erstreckt, und einer Dichtlippe (35), die zwischen der dichtenden Stirnseite (19) und der Nut (27) verläuft, wobei die Dichtlippe (35) elastisch verformbar ist, sodass bei auf den Axialdichtring (9) einwirkender Zentrifugalkraft die Neigung der Dichtlippe (35) in axialer Richtung (11) verringert ist,
- ein Gehäuse (15), das auf der Außenseite (25) des Dichtkörpers (13) angeordnet ist und die Nut (27) überdeckt,
wobei der Dichtkörper (13) und das Gehäuse (15) formschlüssig und kraftschlüssig verbunden sind,
wobei ein elastischer Vorspannring (17) in der Nut (27) angeordnet ist, sodass die Dichtlippe (35) in eine axiale Richtung (11) geneigt ist, und wobei der Vorspannring (17) bei auf den Axialdichtring (9) einwirkender Zentrifugalkraft elastisch verformbar ist, sodass er sich aufweitet,
**dadurch gekennzeichnet, dass** die Nut (27) einen abgerundeten Nutboden (29) und zwei voneinander beabstandete Nutflanken (31, 33) hat, von denen eine der dichtenden Stirnseite (19) des Dichtkörpers (13) zugewandt ist, wobei der Bereich des Dichtkörpers (13) zwischen der dichtenden Stirnseite (19) und der gegenüberliegenden, ihr zugewandten Nutflanke (31) die Dichtlippe (35) bildet.

2. Axialdichtring (9) nach Anspruch 1,
wobei der Vorspannring (17) ein gerundetes Profil hat.

3. Axialdichtring (9) nach Anspruch 1 oder 2,
wobei der Vorspannring (17) elastischer als der Dichtkörper (13) ist.

4. Axialdichtring (9) nach einem der vorangegangenen Ansprüche,
wobei die Nut (27) und das sie überdeckende Gehäuse (15) derart geformt sind, dass sie einen Hohlraum (43) bilden, der sich vom Vorspannring (17) radial nach außen erstreckt.

5. Axialdichtring (9) nach Anspruch 4,
wobei die Nut (27) eine schrägt verlaufende Flanke (33) aufweist, sodass der Hohlraum (43) entgegen der axialen Richtung (11) aufgeweitet ist.

6. Axialdichtring (9) nach einem der vorangegangenen Ansprüche,
wobei der Dichtkörper (13) eine weitere Stirnseite (21) abgewandt von der dichtenden Stirnseite (19) hat und das Gehäuse (15) sich entlang der weiteren Stirnseite (21) über die Außenseite (25) bis zur Dichtlippe (35) erstreckt.

7. Axialdichtring (9) nach einem der vorangegangenen Ansprüche,
wobei die Außenseite (25) des Dichtkörpers (13) in die Innenseite des Gehäuses (15) eingreift, sodass eine formschlüssige und/oder kraftschlüssige Verbindung gebildet wird.

8. Axialdichtring (9) nach einem der vorangegangenen Ansprüche,
wobei eine Oberkante der Dichtlippe (35) abgeschrägt ist und das Gehäuse (15) nicht berührt.

9. Axialdichtring (9) nach einem der vorangegangenen Ansprüche,
wobei das Gehäuse (15) metallisch, insbesondere aus Stahl ausgebildet ist.

10. Axialdichtring (9) nach einem der vorangegangenen Ansprüche,
wobei der Vorspannring (17) aus Acrylnitril-Butadien-Kautschuk ausgebildet ist.

11. Axialdichtring (9) nach einem der vorangegangenen Ansprüche,
wobei der Dichtkörper (13) aus einem Materialverbund ausgebildet ist.

## Claims

1. Axial sealing ring (9) which is supported on a rotatable shaft in a driven tool and comprises
- a sealing body (13) having a sealing end face (19), an outer side (25), a circumferential groove (27) which extends from the outer side (25) into the interior of the sealing body, and a sealing lip (35) which extends between the sealing end face (19) and the groove (27), the sealing lip (35) being elastically deformable so that, when centrifugal force acts on the axial sealing ring (9), the inclination of the sealing lip (35) in the axial direction (11) is reduced,
- a housing (15) which is arranged on the outer side (25) of the sealing body (13) and covers the groove (27),
the sealing body (13) and the housing (15) being form-fittingly and frictionally connected,
an elastic preloading ring (17) being arranged in the groove (27) so that the sealing lip (35) is inclined in an axial direction (11), and the preloading ring (17) being elastically deformable when centrifugal force acts on the axial sealing ring (9) so that it widens,
**characterized in that** the groove (27) has a rounded groove bottom (29) and two groove flanks (31, 33) which are spaced apart and one of which faces the sealing end face (19) of the sealing body (13), the region of the sealing body (13) between the sealing end face (19) and the opposite groove flank (31) which faces this end face forming the sealing lip (35).

2. Axial sealing ring (9) according to claim 1,
wherein the preloading ring (17) has a rounded profile.

3. Axial sealing ring (9) according to either claim 1 or claim 2,
wherein the preloading ring (17) is more elastic than the sealing body (13).

4. Axial sealing ring (9) according to any of the preceding claims,
wherein the groove (27) and the housing (15) which covers this groove are shaped such that they form a cavity (43) which extends radially outward from the preloading ring (17).

5. Axial sealing ring (9) according to claim 4,
wherein the groove (27) has an obliquely extending flank (33) so that the cavity (43) is widened in the opposite direction to the axial direction (11).

6. Axial sealing ring (9) according to any of the preceding claims,
wherein the sealing body (13) has a further end face (21) which faces away from the sealing end face (19) and the housing (15) extends along the further end face (21) over the outer side (25) as far as the sealing lip (35).

7. Axial sealing ring (9) according to any of the preceding claims,
wherein the outer side (25) of the sealing body (13) engages in the inner side of the housing (15) so that a form-fitting and/or frictional connection is formed.

8. Axial sealing ring (9) according to any of the preceding claims,
wherein an upper edge of the sealing lip (35) is beveled and does not touch the housing (15).

9. Axial sealing ring (9) according to any of the preceding claims,
wherein the housing (15) is made of metal, in particular of steel.

10. Axial sealing ring (9) according to any of the preceding claims,
wherein the preloading ring (17) is made of acrylonitrile-butadiene rubber.

11. Axial sealing ring (9) according to any of the preceding claims,
wherein the sealing body (13) is formed from a composite material.

## Revendications

1. Bague d'étanchéité axiale (9) supportée sur un arbre pouvant tourner dans un outil entraîné comprenant
- un corps d'étanchéité (13) comportant une face frontale d'étanchéité (19) et une face extérieure (25) ainsi qu'une rainure (27) périphérique qui s'étend depuis la face extérieure (25) vers l'intérieur de corps d'étanchéité, et une lèvre d'étanchéité (35) qui s'étend entre la face frontale d'étanchéité (19) et la rainure (27), dans laquelle la lèvre d'étanchéité (35) est déformable élastiquement, de sorte que, lorsqu'une force centrifuge agit sur la bague d'étanchéité axiale (9), l'inclinaison de la lèvre d'étanchéité (35) est réduite dans la direction axiale (11),
- un boîtier (15) qui est disposé sur la face extérieure (25) du corps d'étanchéité (13) et qui recouvre la rainure (27),
dans laquelle le corps d'étanchéité (13) et le boîtier (15) sont reliés par complémentarité de forme et par adhérence,
dans laquelle une bague de précontrainte (17) élastique est disposée dans la rainure (27), de sorte que la lèvre d'étanchéité (35) est inclinée dans une direction axiale (11), et dans laquelle la bague de précontrainte (17) est déformable élastiquement lorsque la force centrifuge agit sur la bague d'étanchéité axiale (9), de sorte que ladite bague de précontrainte s'élargit,
**caractérisée en ce que** la rainure (27) possède un fond de rainure (29) arrondi et deux flancs de rainure (31, 33) espacés l'un de l'autre, parmi lesquels l'un est tourné vers la face frontale d'étanchéité (19) du corps d'étanchéité (13), dans laquelle la zone du corps d'étanchéité (13) entre la face frontale d'étanchéité (19) et le flanc de rainure (31) opposé tourné vers celle-ci forment la lèvre d'étanchéité (35).

2. Bague d'étanchéité axiale (9) selon la revendication 1,
dans laquelle la bague de précontrainte (17) possède un profil arrondi.

3. Bague d'étanchéité axiale (9) selon la revendication 1 ou 2,
dans laquelle la bague de précontrainte (17) est plus élastique que le corps d'étanchéité (13).

4. Bague d'étanchéité axiale (9) selon l'une des revendications précédentes,
dans laquelle la rainure (27) et le boîtier (15) qui la recouvre sont formés de telle sorte qu'ils forment une cavité (43) qui s'étend radialement vers l'extérieur à partir de la bague de précontrainte (17).

5. Bague d'étanchéité axiale (9) selon la revendication 4,
dans laquelle la rainure (27) présente un flanc (33) s'étendant en oblique, de sorte que la cavité (43) est élargie dans la direction opposée à la direction axiale (11).

6. Bague d'étanchéité axiale (9) selon l'une des revendications précédentes,
dans laquelle le corps d'étanchéité (13) possède une autre face frontale (21) opposée à la face frontale d'étanchéité (19) et le boîtier (15) s'étend le long de l'autre face frontale (21) sur la face extérieure (25) jusqu'à la lèvre d'étanchéité (35).

7. Bague d'étanchéité axiale (9) selon l'une des revendications précédentes,
dans laquelle la face extérieure (25) du corps d'étanchéité (13) vient en prise dans la face intérieure du boîtier (15), de sorte qu'une liaison par complémentarité de forme et/ou par adhérence est formée.

8. Bague d'étanchéité axiale (9) selon l'une des revendications précédentes,
dans laquelle un bord supérieur de la lèvre d'étanchéité (35) est biseauté et n'est pas en contact avec le boîtier (15).

9. Bague d'étanchéité axiale (9) selon l'une des revendications précédentes,
dans laquelle le boîtier (15) est réalisée de manière métallique, en particulier en acier.

10. Bague d'étanchéité axiale (9) selon l'une des revendications précédentes,
dans laquelle la bague de précontrainte (17) est réalisée à partir de caoutchouc acrylonitrile-butadiène.

11. Bague d'étanchéité axiale (9) selon l'une des revendications précédentes,
dans laquelle le corps d'étanchéité (13) est réalisé en un matériau composite.
